# EUROPEAN PATENT APPLICATION

(11) **EP 3 211 574 A1**
(43) Date of publication of application: **30.08.2017**
(21) Application number: 17156899.1
(22) Date of filing: 20.02.2017
(51) Int. Cl.: G06Q 10/06

(54) **SYSTEMS AND METHODS FOR WORK ASSIGNMENT AND DISTRIBUTION FROM A SERVER**

(30) Priority: 29.02.2016 JP 2016037967
(71) Applicant: Toshiba TEC Kabushiki Kaisha, Tokyo 141-0032 (JP)
(72) Inventor: NISHIKAWA, Hiroshi, Shinagawa-ku, Tokyo 141-8562 (JP)
(74) Representative: Takeuchi, Maya

(57) **Abstract**

A work assignment support server according to an embodiment includes a communication interface, a storage unit, and a processor. The server registers a work request, and transmits, to a plurality of terminal apparatuses, work request information corresponding to the registered work request. The server receives, from at least one of the terminal apparatuses, a response to the work request information. The server transmits, to a designated one of the terminal apparatuses from which a response to the work request information was received, an assignment information that assigns the work request to the designated terminal apparatus. The server transmits, to the plurality of terminal apparatuses other than the designated terminal apparatus, a cancellation notification that cancels the work request.

## Description

### FIELD

The present invention generally relates to a work assignment technology using technical supports, and embodiments described herein relate more particularly to a work assignment support server, a method, and a program.

### BACKGROUND

In a store such as a supermarket, various types of work occur in real time. For example, when customers are crowded, work, such as newly activating a POS terminal for reducing crowdedness, may be assigned. The assignment of the relevant work is done according to a predetermined static work plan or a status determination of the work manager.

However, if the work is assigned according to the static work plan, there is a possibility that waste occurs. In such a case, there may be a decrease in motivation because the productivity of employees does not increase according to the actual status of the store. If the work is assigned by the work manager, there is a possibility that the relationship between the work manager and the employee influences the assignment of the work. Also, there is a problem that the assignment of work depends on the ability of the work manager.

To solve such problems, there is provided a work assignment support server comprising:
a communication interface;
a storage unit; and
a processor configured to control the communication interface and storage unit to:
   register a work request,
   transmit, to a plurality of terminal apparatuses, work request information corresponding to the registered work request,
   receive, from at least one of the terminal apparatuses, a response to the work request information,
   transmit, to a designated one of the terminal apparatuses from which a response to the work request information was received, an assignment information that assigns the work request to the designated terminal apparatus,
   transmit, to the plurality of terminal apparatuses other than the designated terminal apparatus, a cancellation notification that cancels the work request.

Preferably, the processor is further configured to:
receive, from the designated terminal apparatus, a completion notification that indicates the work request is complete.

Preferably still, the work request includes a work ID corresponding to one of a plurality of work IDs stored in the storage unit, each in correlation with an amount of reward points,
the processor is further configured to control the communication interface and storage unit to:
when the completion notification is received, determine an amount of earned reward points based on the amount of reward points stored in correlation with the work ID of the work request, and
store the determined amount of earned reward points in connection with a user ID associated with the designated terminal apparatus.

Preferably yet, an estimated work time is stored in correlation with each of the plurality of work IDs,
the processor is further configured to count an elapsed time between transmitting the work request information and receiving the completion notification, and
the amount of earned reward points is further determined based on the counted elapsed time compared to the estimated work time.

Suitably, the processor is further configured to count an elapsed time between transmitting the work request information and receiving the response to the work request information, and
the amount of earned reward points is further determined based on the counted elapsed time compared to the estimated work time.

Suitably still, the processor is further configured to determine a total number of received responses to the work request information, and
the amount of earned reward points is further determined based on the determined total number of received responses.

Suitably yet, the completion notification includes an evaluation level of the completed work request, and
the amount of earned reward points is further determined based on the evaluation level.

The invention also relates to a method of assigning work in a system including a work assigning support server and a plurality of terminal apparatuses in communication with the server, the method comprising the steps of:
registering a work request;
transmitting, from the server to the plurality of terminal apparatuses, work request information corresponding to the registered work request;
receiving, in the server, a response to the work request information from at least one of the terminal apparatuses;
transmitting, from the server to a designated one of the terminal apparatuses from which a response to the work request information was received, an assignment information that assigns the work request to the designated terminal apparatus; and
transmitting, from the server to the plurality of terminal apparatuses other than the designated terminal apparatus, a cancellation notification that cancels the work request.

Preferably, the method further comprises the steps of:
receiving, in the server and from the designated terminal apparatus, a completion notification that indicates the work request is complete.

Preferably still, the method further comprises the steps of:
storing a plurality of work IDs each in correlation with an amount of reward points, wherein the work request includes a work ID corresponding to one of the stored plurality of work IDs;
when the completion notification is received, determining an amount of earned reward points based on the amount of reward points stored in correlation with the work ID of the work request; and
storing the determined amount of earned reward points in connection with a user ID associated with the designated terminal apparatus.

Preferably yet, an estimated work time is stored in correlation with each of the plurality of work IDs, and
the amount of earned reward points is further determined based on the estimated work time stored in correlation with the work ID included in the work request compared to an elapsed time between transmitting the work request information and receiving the completion notification.

Conveniently, the amount of earned reward points is further determined based on an elapsed time between transmitting the work request information and receiving the response to the work request information.

Conveniently still, the amount of earned reward points is further determined based on a total number of received responses.

In the above method, the completion notification preferably includes an evaluation level of the completed work request, and
the amount of earned reward points is preferably further determined based on the evaluation level.

The invention also concerns a non-transitory computer readable medium, the program including instructions causing a server to perform the method of assigning work as defined above.

The invention further concerns a-computer program product comprising program code means stored on a computer readable medium for performing the method of assigning work as defined above.

### DESCRIPTION OF THE DRAWINGS

The above and other objects, features and advantages of the present invention will be made apparent from the following description of the preferred embodiments, given as non-limiting examples, with reference to the accompanying drawings, in which:
FIG. 1 is a diagram schematically illustrating an example configuration of a work management system according to an embodiment.
FIG. 2 is a diagram illustrating an example configuration of a work management server.
FIG. 3 is a diagram schematically illustrating an example data structure of a work management table.
FIG. 4 is a diagram schematically illustrating an example data structure of a work information table.
FIG. 5 is a diagram illustrating an example configuration of a salesperson terminal.
FIG. 6 is a diagram illustrating an example of a response screen.
FIG. 7 is a diagram illustrating an example of a response status screen.
FIG. 8 is a flowchart illustrating an example sequence of operations of work assignment performed by the work management server and the salesperson terminal.
FIG. 9 is a flowchart illustrating an example sequence of operations of giving reward points performed by the work management server.

### DETAILED DESCRIPTION

An exemplary embodiment provides a work assignment support apparatus, a terminal apparatus, and a program that can fairly and efficiently assign work.

A work assignment support server according to an embodiment includes a communication interface, a storage unit, and a processor. The server registers a work request, and transmits, to a plurality of terminal apparatuses, work request information corresponding to the registered work request. The server receives, from at least one of the terminal apparatuses, a response to the work request information. The server transmits, to a designated one of the terminal apparatuses from which a response to the work request information was received, an assignment information that assigns the work request to the designated terminal apparatus. The server transmits, to the plurality of terminal apparatuses other than the designated terminal apparatus, a cancellation notification that cancels the work request.

Hereinafter, embodiments of a work assignment support apparatus, a terminal apparatus, and a program will be described in detail with reference to the accompanying drawings. In the following embodiment, although an example in which a work assignment support apparatus, a terminal apparatus, and a program according to an exemplary embodiment are applied to a store such as a supermarket is described, the embodiment is not limited thereto.

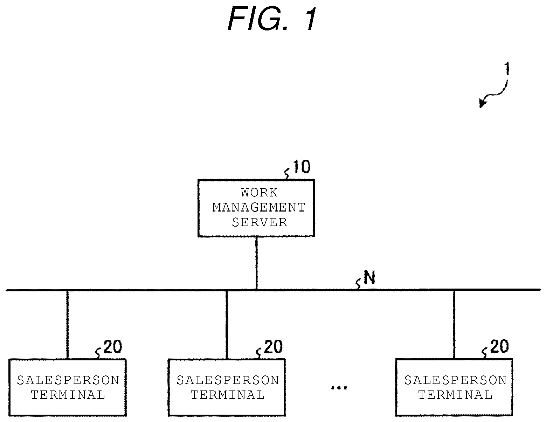

FIG. 1 is a diagram schematically illustrating an example configuration of a work management system 1 according to the present embodiment. The work management system 1 includes a work management server 10 and sales terminals 20. The work management server 10 and the sales terminal 20 are connected to each other via a network N such as the internet or a local area network (LAN).

The work management server 10 is a server corresponding to a work assignment support apparatus. The work management server 10 manages various types of work that occurs in real time, and supports the assignment of the work.

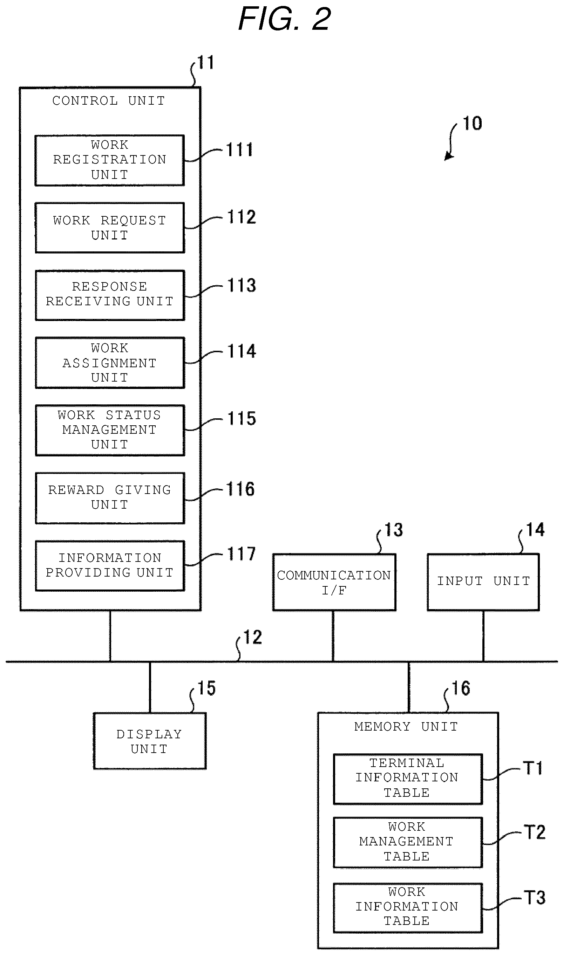

The work management server 10 has the configuration as illustrated in FIG. 2, for example. FIG. 2 is a diagram illustrating an example configuration of the work management server 10.

As illustrated in FIG. 2, the work management server 10 includes a control unit 11 including a central processing unit (CPU), a read only memory (ROM), a random access memory (RAM), and the like. The control unit 11 also performs a clock function such as real time clock (RTC).

The control unit 11 is connected to a communication interface (I/F) 13, an input unit 14, a display unit 15, and a memory unit 16 via a bus 12.

The communication I/F 13 is a wired or wireless communication interface for connection to the network N. The input unit 14 includes an input device such as a keyboard or a pointing device. The input unit 14 receives an operation input from an operator via the input device, and notifies the control unit 11 of a signal in accordance with the operation content. The display unit 15 includes a display device such as a liquid crystal display. The display unit 15 displays various types of information according to the control of the control unit 11.

The memory unit 16 includes a memory device such as a hard disk drive (HDD), or a solid state drive (SSD). The memory unit 16 stores various programs that are executed by the control unit 11 (CPU), setting information, and the like.

The memory unit 16 stores a terminal information table T1 in which an address of the sales terminal 20 and a salesperson ID for identifying a salesperson (an employee) who operates the sales terminal 20 are stored in correlation with a terminal ID for identifying each sales terminal 20. The control unit 11 determines the address of the sales terminal 20 that is a transmission destination of various types of information by referring to the terminal information table T1. The control unit 11 determines the salesperson (salesperson ID) from the terminal ID of the sales terminal 20, or determines the terminal ID of the sales terminal 20 from the salesperson by referring to the terminal information table T1.

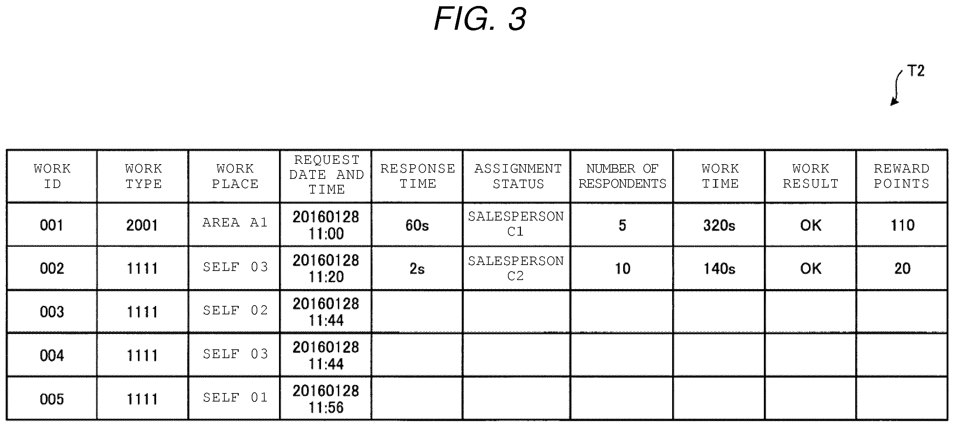

The memory unit 16 stores a work management table T2 for managing work. FIG. 3 is a diagram schematically illustrating an example data structure of the work management table T2. As illustrated in FIG. 3, the work management table T2 stores a work type, a work place, and the request date and time in correlation with a work ID for identifying each work. In the "work type" field, the type of work that occurs in the store is registered. The work type includes, for example, work corresponding to a call from a customer (a salesperson call), work for replenishing a change machine with change (change replenishment), work for replenishing a POS terminal with receipt paper (receipt paper replenishment), and the like. In the "work place" field, a place where the work is performed, the identification information of the apparatus that is a target of the work, and the like are registered. The work place includes, for example, an area name, identification information for identifying each cash register installed in the store (hereinafter, referred to as a cash register number), and the like. In the "request date and time" field, the date and time when the work is registered is stored.

The work management table T2 stores a response time, an assignment status, the number of respondents, a work time, and a work result in correlation with the work ID. These information items indicate a result of an operation that the salesperson performs during a period from the work request to the completion of the work. Specifically, in the "response time" field, the time from the work request to the first response is stored. In the "assignment status" field, the salesperson ID of the person to whom the work is assigned is stored. In the "number of respondents" field, the total number of the salespersons who respond to the work request is stored. The "work time" field, the time from the determination of the assigned person to the completion of the work is stored. In the "work result" field, the execution result of the work is stored.

The work management table T2 stores reward points in correlation with the work ID or the salesperson ID in the "assignment status" field. In the "reward points" field, a points value that is given to the salesperson (salesperson ID) as a reward for the work is stored.

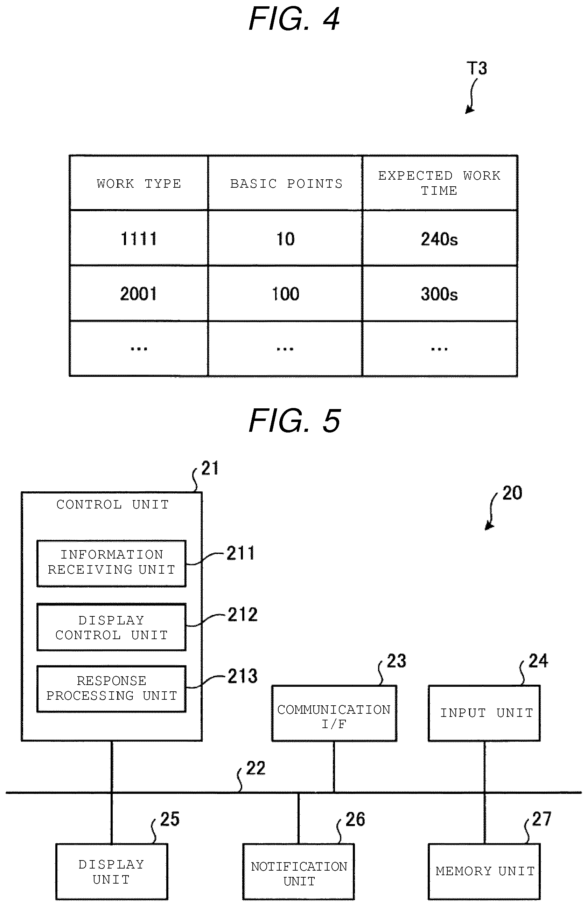

The memory unit 16 also stores a work information table T3 in which basic information of each work type is stored. FIG. 4 is a diagram schematically illustrating an example data structure of the work information table T3. As illustrated in FIG. 4, the work information table T3 stores basic points, expected work time, and the like in correlation with each work type. In the "basic points" field, a reference value of the points that is given as a reward is stored. In the "expected work time" field, the expected time that is required to complete the work is stored. The basic points are preferably determined based on a predetermined evaluation criterion such as work importance or work load. It is preferable that the expected work time is determined based on the past actual value or the like.

The work management server 10 includes functional units that are implemented in the control unit 11 (CPU) configured by the program stored in the ROM or the memory unit 16. Specifically, as illustrated in FIG. 2, the functional units such as a work registration unit 111, a work request unit 112, a response receiving unit 113, a work assignment unit 114, a work status management unit 115, a reward giving unit 116, and an information providing unit 117 are realized on the RAM by executing the program by the control unit 11 (CPU). In one embodiment, the control unit 11 is a processor that is programmed to carry out the functions of the work registration unit 111, the work request unit 112, the response receiving unit 113, the work assignment unit 114, the work status management unit 115, the reward giving unit 116, and the information providing unit 117. In another embodiment, the control unit 11 is a hardware controller, e.g., an application specific integrated circuit (ASIC) and field programmable gate array (FPGA), that is configured to carry out the functions of the work registration unit 111, the work request unit 112, the response receiving unit 113, the work assignment unit 114, the work status management unit 115, the reward giving unit 116, and the information providing unit 117.

The work registration unit 111 is a functional unit that registers work as a request target in the work management table T2. Specifically, the work registration unit 111 registers the work type and the work place of the work in the corresponding field of the work management table T2. The work registration unit 111 registers the registration date and time of the work in the "request date and time" field of the work management table T2. The work ID of the work management table T2 may be assigned by the work registration unit 111 or may be automatically assigned.

Here, the work type and the work place may be manually input via the input unit 14 or the like, or may be input from an external apparatus. In the former case, for example, a salesperson who operates the work management server 10 inputs the work type and the work place of the work that occurs in real time via the input unit 14, and thus the work is registered in the work management table T2. In the latter case, the work type and the work place of the work may be spontaneously input by an external apparatus such as a cash register installed in the store. For example, when a salesperson call is performed in a self-service cash register, the cash register may automatically transmit the work type (salesperson call) and the work place (cash register number) to the work management server 10.

When new work is registered in the work management table T2, the work request unit 112 transmits work request information for requesting the work to each of the sales terminals 20. The work request unit 112 checks the work management table T2 at predetermined time intervals. When the work of which the assignment status is undetermined (blank) is detected, the work request unit 112 transmits the work request information for requesting the work to each of the sales terminals 20. Here, the work request information includes at least a work ID, a work type, and a work place of the work as the request target.

The response receiving unit 113 receives a response from one of the sales terminals 20 for the work request information transmitted by the work request unit 112 during a predetermined receiving period (for example, five minutes). When the first response is received during the receiving period, the response receiving unit 113 registers the time from the transmission of the work request information to the reception of the response in the "response time" field of the corresponding work ID. It is assumed that the response from the sales terminal 20 includes the work ID of the original work request information and the terminal ID of the sales terminal 20.

The work assignment unit 114 is a functional unit that controls assignment of the work requested by the work request information. Specifically, the work assignment unit 114 specifies the terminal ID of the sales terminal 20 that most quickly responds among the sales terminals 20 that respond during the receiving period, by cooperating with the response receiving unit 113. The work assignment unit 114 registers the salesperson ID corresponding to the specified terminal ID in the "assignment status" field of the corresponding work ID in table T2. Accordingly, at the timing at which the work is registered, the work is requested for the respective salespersons, and thus the salesperson who most quickly responds among the salespersons who respond can be assigned as the designated salesperson("designated salesperson"). Therefore, it is possible to fairly and efficiently assign the work. In addition, an active salesperson can be assigned as the person in charge of the work, and thus it is possible to improve the operation efficiency of store operation and the productivity of salespersons.

When the designated salesperson is determined to be assigned to one work request information item, the work assignment unit 114 transmits assignment information for notifying work assignment to the sales terminal 20 possessed by the designated salesperson. The work assignment unit 114 also transmits cancel information for notifying cancellation of the work request to the sales terminals 20 possessed by the salespersons other than the designated salesperson. It is assumed that the assignment information and the cancel information include at least the work ID of the work as the assignment target or the cancel target.

When the designated salesperson is determined to be assigned one work request information item, the work assignment unit 114 registers the number of responses received by the response receiving unit 113 during the receiving period in the "number of respondents" field of the corresponding work ID. When there is a response from the sales terminal 20 for the work of which "assignment status" field is registered, the work assignment unit 114 returns an error notification to the sales terminal 20.

The work status management unit 115 manages the work status of the work that is assigned to the designated salesperson by the work assignment unit 114. For example, the work status management unit 115 detects the completion of the work that is assigned to the designated salesperson by the work assignment unit 114. Specifically, the work status management unit 115 retrieves the work of which "assignment status" field is registered and "work result" field is not registered from the work management table T2. When information is registered in the "work result" field, the work status management unit 115 detects that the work is completed.

Here, the registration in the "work result" field may be performed manually via the input unit 14, or may be performed by the work status management unit 115 or the like according to an instruction from an external apparatus. In the latter case, for example, the work status management unit 115 registers information indicating the work result (OK) in the "work result" field of the corresponding work on condition that the work completion is notified by the sales terminal 20 of the designated salesperson. It is assumed that the notification of the work completion includes at least the work ID of the target work.

When the work completion is detected, the work status management unit 115 calculates, as the work time, the time from the request date and time that is registered in correlation with the work ID of the work to the date and time when the work completion is detected. The work status management unit 115 registers the calculated work time in the "work time" field of the corresponding work.

The reward giving unit 116 gives reward points as a reward for the work to the designated salesperson who completed the work. Specifically, the reward giving unit 116 specifies the work type of the work (work ID) of which completion is detected by the work status management unit 115 by referring to the work management table T2. When the basic points corresponding to the specified work type is read from the work information table T3, the reward giving unit 116 calculates the reward points based on the basic points. The reward giving unit 116 gives the calculated reward points to the designated salesperson by registering the calculated reward points in the "reward points" field of the work (work ID) of which completion is detected by the work status management unit 115.

Here, the reward points are calculated by adding additional points to the basic points. The method of determining the additional points are not particularly limited. For example, the additional points may be derived based on the operation content of the designated salesperson performed during the period from the transmission of the work request information to the completion of the work.

As an example, the additional points may be derived based on the work time of the designated salesperson. In this case, the reward giving unit 116 reads the expected work time corresponding to the specified work type from the work information table T3. The reward giving unit 116 reads the work time of the work ID with which the work is completed from the work management table T2. The reward giving unit 116 derives the additional points according to the ratio or the difference between the expected work time and the work time. In this case, it is preferable that the additional points are set to higher points when the work time is earlier (shorter) than the expected work time. In this way, it is possible to improve the motivation of salespersons for the work requests by increasing or decreasing the additional points according to the work time. In addition, it is possible to improve the operation efficiency of store operation and the productivity of salespersons.

As another example, the additional points may be derived based on the response time of the designated person. In this case, it is preferable that the additional points are set to higher points when the response time is earlier (shorter). In this way, it is possible to improve the response time and the motivation of the salespersons for the work requests by increasing or decreasing the additional points according to the response time.

As another example, the additional points may be derived based on the number of respondents. In this case, it is preferable that the additional points are set to higher points when the number of respondents is smaller. In this way, it is possible to improve the response rate and the motivation of the salespersons for the work requests by increasing or decreasing the additional points according to the number of respondents.

As another example, when the work result is represented by multi-level evaluation values (excellent, good, allowable, and the like), the additional points may be determined based on the work result. In this case, it is preferable that the additional points are set to higher points when the work result represents a better evaluation value. In this way, it is possible to improve the work quality and the motivation of the salespersons for the requested works by increasing or decreasing the additional points according to the work result.

One who is eligible for the reward points is not limited to the designated salesperson. For example, the reward giving unit 116 may give predetermined reward points (for example, one point) to all salespersons who respond to the work request information. Accordingly, it is possible to improve the response rate of the salesperson for the work request.

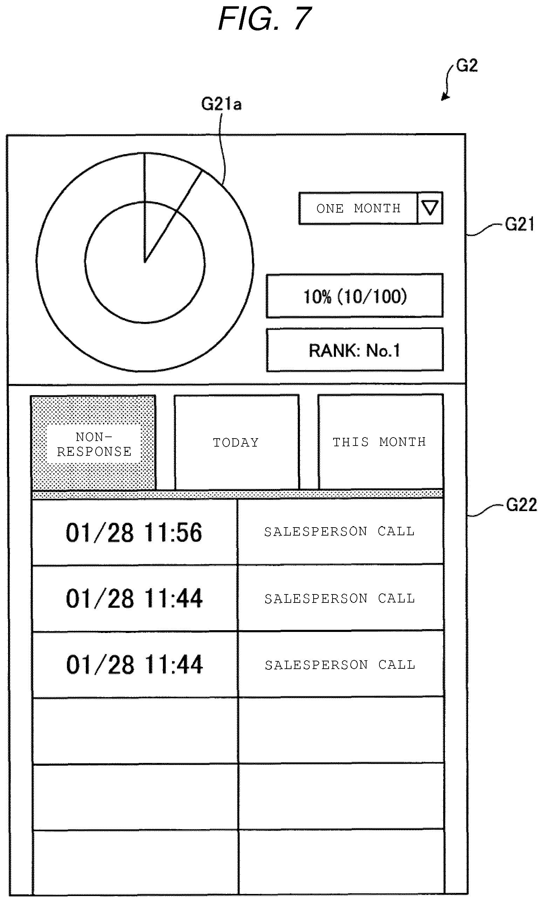

The reward giving unit stores the reward points given to each salesperson in the memory unit 16 in association with the corresponding salesperson ID in a cumulative manner. The cumulative reward points for each salesperson can be provided to the corresponding sales terminal 20, as described further below in connection with FIG. 7.

The information providing unit 117 is a functional unit that provides information to each of the sales terminals 20. More specifically, the information providing unit 117 generates data on each salesperson as provision information from the work management table T2, and provides the data to the sales terminal 20 possessed by the corresponding salesperson. Here, the provision information is not particularly limited, and various forms are possible.

For example, the information providing unit 117 may extract a work ID, a work type, a request date and time, and the like for each salesperson ID from a data column in which a salesperson ID is registered in the "request status" field, and use the extracted result as the provision information. The information providing unit 117 may obtain the proportion and the ranking of the reward points given to a specific salesperson with respect to the reward points given to all salespersons for each salesperson ID on a monthly basis, and use the obtained result as the provision information. For example, the information providing unit 117 may totalize the reward points given to a specific salesperson, and use the totalized result as the provision information.

The timing at which the information providing unit 117 transmits the provision information is not particularly limited. For example, the information providing unit 117 may respectively transmit the provision information for the salesperson of each of the sales terminals 20 at the timing when the work request unit 112 transmits the work request information to each of the sales terminals 20. The information providing unit 117 may transmit the provision information for the salesperson of the sales terminal 20, according to the request from the sales terminal 20.

Returning to FIG. 1, the sales terminal 20 may be a portable terminal such as a smart phone or a wristwatch that is possessed by each salesperson. The sales terminal 20 has a configuration as illustrated in FIG. 5, for example. FIG. 5 is a diagram illustrating an example configuration of the sales terminal 20.

The sales terminal 20 includes a control unit 21 including a CPU, a ROM, a RAM, and the like. The control unit 21 has a clocking function such as RTC (not illustrated).

The control unit 21 is connected to a communication I/F 23, an input unit 24, a display unit 25, a notification unit 26, and a memory unit 27 via a bus 22.

The communication I/F 23 is an interface for wireless connection to the network N. The input unit 24 includes an input device such as a keyboard or a pointing device. The input unit 24 receives an operation input from an operator via the input device, and notifies the control unit 21 of a signal in accordance with the operation content.

The display unit 25 includes a display device such as a liquid crystal display. The display unit 25 displays various types of information according to the control of the control unit 21. The notification unit 26 performs notification by light, sound, vibration, or the like. The memory unit 27 includes a memory device such as a HDD or a SSD. The memory unit 27 stores various programs that are executed by the control unit 21 (CPU), setting information, and the like.

The sales terminal 20 includes functional units that are implemented in the control unit 21 (CPU) configured by the program stored in the ROM or the memory unit 27. Specifically, as illustrated in FIG. 5, the functional units such as an information receiving unit 211, a display control unit 212, and a response processing unit 213 are realized on the RAM by executing the program by the control unit 21 (CPU). In one embodiment, the control unit 21 is a processor that is programmed to carry out the functions of the information receiving unit 211, the display control unit 212, and the response processing unit 213. In another embodiment, the control unit 21 is a hardware controller, e.g., an application specific integrated circuit (ASIC) and field programmable gate array (FPGA), that is configured to carry out the functions of the information receiving unit 211, the display control unit 212, and the response processing unit 213.

The information receiving unit 211 receives various types of information transmitted from the work management server 10 by cooperating with the communication I/F 23. For example, the information receiving unit 211 receives the work request information, the assignment information, the cancel information, the provision information, and the like that are transmitted from the work management server 10. The information receiving unit 211 performs notification by operating the notification unit 26 when information is received from the work management server 10. The information receiving unit 211 may perform notification using screen display by cooperating with the display control unit 212.

The display control unit 212 causes the display unit 25 to display various operation screens in relation with the operation of the sales terminal 20. The display control unit 212 causes the display unit 25 to display a screen according to the information based on the various types of information received by the information receiving unit 211. For example, the display control unit 212 causes the display unit 25 to display a response screen for allowing the user to select whether or not to respond to the work requested by the work request information based on the work request information.

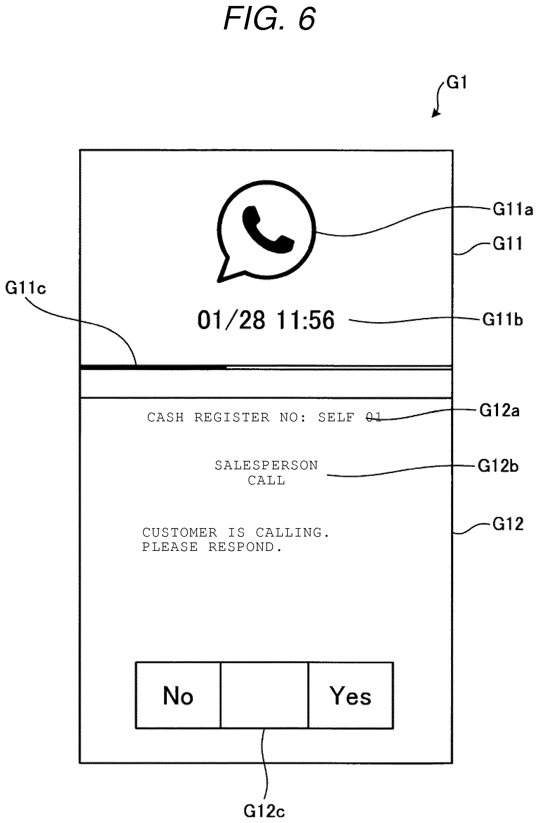

FIG. 6 is a diagram illustrating an example of a response screen. As illustrated in FIG. 6, the response screen G1 includes a first area G11 and a second area G12.

The first area G11 includes an icon image G11a indicating that the work request information is received, time information G11b indicating the current date and time, a progress bar G11c, and the like.

Here, the progress bar G11c indicates the elapsed time from the reception of the work request information, so that the length of the bar is extended with the lapse of time. The progress bar G11c is configured such that the length of the bar becomes the maximum value (100%) when a predetermined waiting time (for example, five minutes) has elapsed.

A salesperson who possesses the sales terminal 20 can intuitively recognize the elapsed time from the work request by confirming the progress bar G11c. The display control unit 212 may change the display color of the progress bar G11c as time lapses. If additional points are increased or decreased according to the response time, the display control unit 212 may display the increase rate of the additional points together with the lapse of time.

In the second area G12, a work place G12a, a work type G12b, and the like that are included in the work request information are displayed. In FIG. 6, an example in which a salesperson call is performed at a self-service cash register with a cash register number (cash register No.) of "SELF 01" is illustrated. In the second area G12, a response button G12c for selecting whether or not to respond to the work request is displayed. The response button G12c instructs responding when slid to the right side and instructs non-responding when slid to the left side.

For example, the display control unit 212 causes the display unit 25 to display a response status screen representing the response status of the operator (salesperson) for the work request based on the work request information and the provision information.

FIG. 7 is a diagram illustrating an example of a response status screen. As illustrated in FIG. 7, the response status screen G2 includes a first area G21 and a second area G22.

In the first area G21, the provision information provided for the operator (salesperson) of the own sales terminal is displayed. Specifically, the proportion and the ranking of the reward points given to the operator of the own sales terminal with respect to the reward points given to all salespersons are displayed in the form of a pie chart G21 a or the like. Here, the information displayed in the first area G21 is configured to be changeable on a monthly basis, and the display content of the information is updated according to the month change operation.

In the second area G22, a history of the work requests is displayed. This history is configured such that items of "non-response", "today", and "this month" can be switched by tabs. For example, when the "non-response" tab is selected, the display control unit 212 displays the work request information of non-response (non-reply) in a time-series order, among the work requests transmitted from the work management server 10. When the "today" tab is selected, the display control unit 212 displays the work request information of non-response and the work request information of the work for which the operator of the sales terminal is the designated salesperson in a time-series order, among the work request information transmitted today. When the "this month" tab is selected, the display control unit 212 displays the work request information of non-response and the work request information of the work for which the operator of the sales terminal is the designated salesperson in a time-series order, among the work request information transmitted in this month.

It is preferable that the display control unit 212 visibly displays the work request information of non-response and the work request information of the work for which the operator of the sales terminal is the designated salesperson by changing the display color or the like. The display control unit 212 may change the display color of the work request information of non-response with the lapse of time, similar to the progress bar G11c of FIG. 6.

When the work request information of non-response is selected from the second area G22, the display control unit 212 may cause the display unit 25 to display a response screen G1 (refer to FIG. 6) related to the work request information. When the work request information of the work for which the operator of the sales terminal is the designated salesperson is selected from the second area G22, the display control unit 212 causes the display unit 25 to display a confirmation screen for confirming that the work is assigned to the designated salesperson. The screen configuration of the confirmation screen is not particularly limited. For example, a screen similar to FIG. 6 in which the response button G12c is disabled may be displayed together with a message indicating that the work is assigned to the person in charge. When the work request information or the provision information is held in the RAM or the like of the own sales terminal, the display control unit 212 may display the response screen G1 or the response status screen G2 by using the information that is held on the sales terminal.

Returning to FIG. 5, the response processing unit 213 is a functional unit that executes response processing for the work request information. Specifically, when responding to the work request information is instructed, the response processing unit 213 transmits response information including the work ID of the work request information and the terminal ID of the sales terminal to the work management server 10.

When the information receiving unit 211 receives the assignment information, the response processing unit 213 cooperates with the display control unit 212 to cause the display unit 25 to display an assignment notification screen for notifying the reception of the assignment information. For example, the response processing unit 213 causes the display unit 25 to display a message indicating that the work is assigned together with the work request information of the work (work ID) instructed by the assignment information.

When the information receiving unit 211 receives the cancel information as a response to the response information, the response processing unit 213 cooperates with the display control unit 212 to cause the display unit 25 to display a notification screen for notifying the reception of the cancel information. For example, the response processing unit 213 causes the display unit 25 to display a message indicating that the work is canceled together with the work request information of the work (work ID) designated in the cancel information. The response processing unit 213 deletes the work request information including the work ID instructed by the cancel information from the own sales terminal on condition that the cancel information is received from the work management server 10.

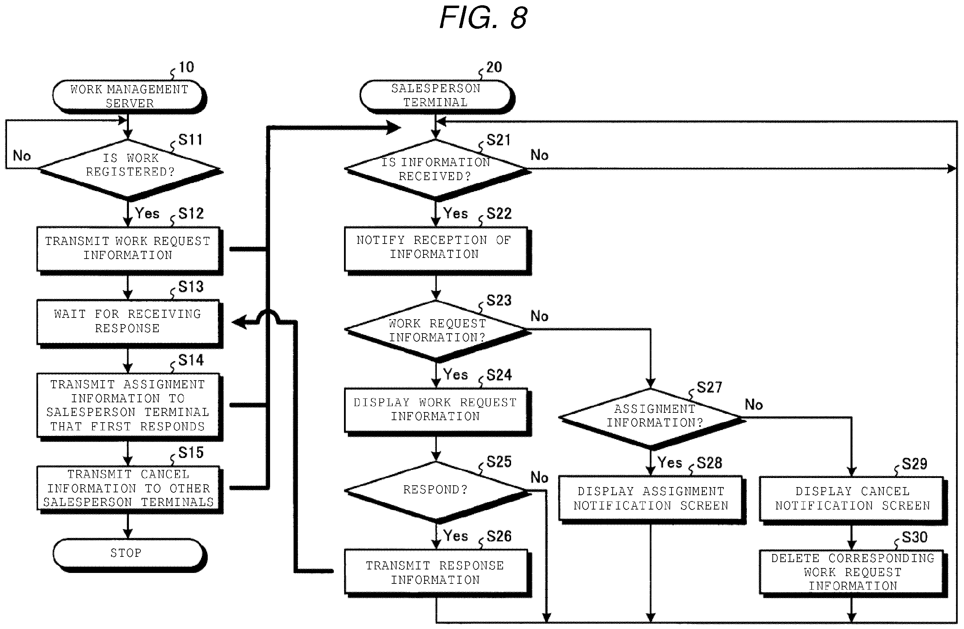

Next, operations of the work management server 10 and the sales terminal 20 will be described. FIG. 8 is a flowchart illustrating an example sequence of operations of work assignment that is executed by the work management server 10 and the sales terminal 20. In this processing, a case where the work request information, the assignment information, and the cancel information are transmitted from the work management server 10 is assumed.

First, the work request unit 112 waits until new work is registered in the work management table T2 by the work registration unit 111 (No in step S11). When new work is registered in the work management table T2 (Yes in step S11), the work request unit 112 transmits the work request information of the work to each of the sales terminals 20 (step S12).

Sequentially, the response receiving unit 113 waits for receiving a response (response information) from the sales terminal 20 for the work request information transmitted in step S12 during a predetermined receiving period (step S13). When the receiving period is ended, the work assignment unit 114 transmits the assignment information to the sales terminal 20 that first responds among the sales terminals 20 that respond (step S14). The work assignment unit 114 transmits the cancel information to the sales terminals 20 other than the sales terminal 20 to which the assignment information is transmitted in step S13 (step S15), and the processing is terminated. Instead of waiting for the end of the receiving period, the assignment information may be transmitted in advance to the sales terminal 20 that first responds.

On the other hand, in the sales terminal 20, the information receiving unit 211 waits for receiving the information that is transmitted from the work management server 10 (No in step S21). When the information is received from the work management server 10 (Yes in step S21), the information receiving unit 211 causes the notification unit 26 to notify the reception of the information (step S22).

For example, the display control unit 212 causes the display unit 25 to display the response screen G1 (refer to FIG. 6) or the response status screen G2 (refer to FIG. 7) according to an operation or the like via the input unit 24.

When the information received in step S21 is the work request information (Yes in step S23), the response processing unit 213 causes the display unit 25 to display the work request information (step S24). Next, the response processing unit 213 determines whether or not responding to the work request information displayed is instructed in step S24 (step S25). When responding is instructed (Yes in step S25), the response processing unit 213 transmits the response information to the work management server 10 (step S26). Next, the response processing unit 213 returns to step S21. When non-responding is instructed in step S25 (No in step S25), the response processing unit 213 returns to step S21.

When the information received in step S21 is the assignment information (No in step S23→Yes in step S27), the response processing unit 213 causes the display unit 25 to display an assignment notification screen for notifying the reception of the assignment information (step S28), and the process returns to step S21.

When the information received in step S21 is the cancel information (No in step S23→No in step S27), the response processing unit 213 causes the display unit 25 to display a cancel notification screen for notifying the reception of the cancel information (step S29). Next, the response processing unit 213 deletes the work request information instructed by the cancel information from the sales terminal (step S30), and the process returns to step S21.

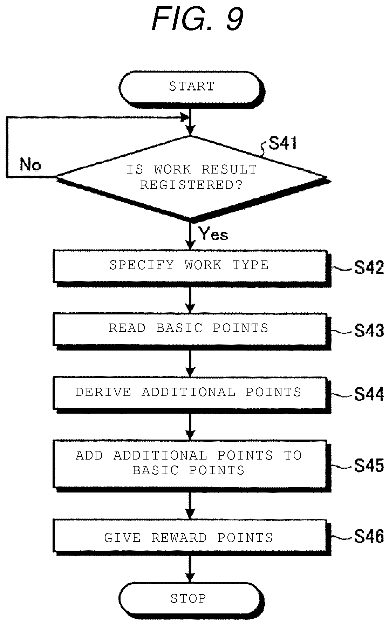

Next, the operation related to giving of reward points will be described with reference to FIG. 9. FIG. 9 is a flowchart illustrating an example of processing related to giving of reward points that is executed by the work management server 10.

The reward giving unit 116 of the work management server 10 waits until the work result is registered for respective works (work IDs) which are registered in the work management table T2 and which has blank "work result" fields (No in step S41). When the work result is registered (Yes in step S41), the reward giving unit 116 specifies the work type (step S42).

Sequentially, the reward giving unit 116 reads the basic points corresponding to the work type specified in step S42 from the work information table T3 (step S43). Next, the reward giving unit 116 determines the additional points based on various factors related to the work (step S44).

The reward giving unit 116 calculates the reward points by adding the additional points that are derived in step S44 to the basic points that are read in step S43 (step S45). The reward giving unit 116 registers the reward points that are calculated in step S45 in the work management table T2 in correlation with the work ID of the work of which work result is registered, thereby giving the reward points to the person in charge of the work (step S46). Then, the process ends.

While certain embodiment has been described, the embodiment has been presented by way of example only, and is not intended to limit the scope of the inventions. Indeed, the novel embodiment described herein may be embodied in a variety of other forms; furthermore, various omissions, substitutions and changes in the form of the embodiment described herein may be made without departing from the framework of the inventions. The accompanying claims and their equivalents are intended to cover such forms or modifications as would fall within the scope and framework of the inventions.

For example, in the above-described embodiment, although the work that occurs in a store is set as an assignment target, the embodiment is not limited thereto, and the work that occurs in other fields or other environments may be set as an assignment target.

In the above-described embodiment, when non-responding is instructed by the sales terminal 20, although the configuration in which the non-response is not notified to the work management server 10 is used, the embodiment is not limited thereto, and a configuration in which the non-response is notified to the work management server 10 may be used. In this case, the response processing unit 213 of the sales terminal 20 may delete the corresponding work request information according to the instruction of the non-responding. The response receiving unit 113 of the work management server 10 may perform processing such as excluding the sales terminal 20 from the transmission target of the cancel information according to the notification for instructing the non-responding from the sales terminal 20.
An example of related art includes JP-A-2002-140768.

## Claims

1. A work assignment support server comprising:
a communication interface;
a storage unit; and
a processor configured to control the communication interface and storage unit to:
register a work request,
transmit, to a plurality of terminal apparatuses, work request information corresponding to the registered work request,
receive, from at least one of the terminal apparatuses, a response to the work request information,
transmit, to a designated one of the terminal apparatuses from which a response to the work request information was received, an assignment information that assigns the work request to the designated terminal apparatus,
transmit, to the plurality of terminal apparatuses other than the designated terminal apparatus, a cancellation notification that cancels the work request.

2. The server according to claim 1, wherein the processor is further configured to:
receive, from the designated terminal apparatus, a completion notification that indicates the work request is complete.

3. The server according to claim 2, wherein
the work request includes a work ID corresponding to one of a plurality of work IDs stored in the storage unit, each in correlation with an amount of reward points,
the processor is further configured to control the communication interface and storage unit to:
when the completion notification is received, determine an amount of earned reward points based on the amount of reward points stored in correlation with the work ID of the work request, and
store the determined amount of earned reward points in connection with a user ID associated with the designated terminal apparatus.

4. The server according to claim 3, wherein:
an estimated work time is stored in correlation with each of the plurality of work IDs,
the processor is further configured to count an elapsed time between transmitting the work request information and receiving the completion notification, and
the amount of earned reward points is further determined based on the counted elapsed time compared to the estimated work time.

5. The server according to claim 3, wherein:
the processor is further configured to count an elapsed time between transmitting the work request information and receiving the response to the work request information, and
the amount of earned reward points is further determined based on the counted elapsed time compared to the estimated work time.

6. The server according to claim 3, wherein:
the processor is further configured to determine a total number of received responses to the work request information, and
the amount of earned reward points is further determined based on the determined total number of received responses.

7. The server according to claim 3, wherein:
the completion notification includes an evaluation level of the completed work request, and
the amount of earned reward points is further determined based on the evaluation level.

8. A method of assigning work in a system including a work assigning support server and a plurality of terminal apparatuses in communication with the server, the method comprising the steps of:
registering a work request;
transmitting, from the server to the plurality of terminal apparatuses, work request information corresponding to the registered work request;
receiving, in the server, a response to the work request information from at least one of the terminal apparatuses;
transmitting, from the server to a designated one of the terminal apparatuses from which a response to the work request information was received, an assignment information that assigns the work request to the designated terminal apparatus; and
transmitting, from the server to the plurality of terminal apparatuses other than the designated terminal apparatus, a cancellation notification that cancels the work request.

9. The method according to claim 8, further comprising the steps of:
receiving, in the server and from the designated terminal apparatus, a completion notification that indicates the work request is complete.

10. The method according to claim 9, further comprising the steps of:
storing a plurality of work IDs each in correlation with an amount of reward points, wherein the work request includes a work ID corresponding to one of the stored plurality of work IDs;
when the completion notification is received, determining an amount of earned reward points based on the amount of reward points stored in correlation with the work ID of the work request; and
storing the determined amount of earned reward points in connection with a user ID associated with the designated terminal apparatus.

11. The method according to claim 10, wherein:
an estimated work time is stored in correlation with each of the plurality of work IDs, and
the amount of earned reward points is further determined based on the estimated work time stored in correlation with the work ID included in the work request compared to an elapsed time between transmitting the work request information and receiving the completion notification.

12. The method according to claim 10, wherein:
the amount of earned reward points is further determined based on an elapsed time between transmitting the work request information and receiving the response to the work request information.

13. The method according to claim 10, wherein:
the amount of earned reward points is further determined based on a total number of received responses.

14. A non-transitory computer readable medium, the program including instructions causing a server to perform the method of assigning work according to any one of claims 8 to 13.

15. A computer program product comprising program code means stored on a computer readable medium for performing the method of assigning work according to any one of claims 8 to 13, when the program product is run on a computer.
